# EUROPEAN PATENT APPLICATION

(11) **EP 1 770 542 A1**
(43) Date of publication of application: **04.04.2007**
(21) Application number: 05750248.6
(22) Date of filing: 13.05.2005
(51) Int. Cl.: G06F 17/00

(54) **AUTOMATED SYSTEM AND METHOD FOR PLANNING AND CREATING OPTIMISED CIRCUITS FOR OUTDOOR ADVERTISING MEDIA**

(30) Priority: 26.05.2004 ES 200401269
(71) Applicant: Cuende Infometrics S.A., 28046 Madrid (ES)
(72) Inventor: CUENDE ALONSO, Daniel, E-28230 Las Rozas (ES)
(74) Representative: Ungria Lopez, Javier
(86) International application number: PCT/ES2005/000266
(87) International publication number: WO 2005/119497

(57) **Abstract**

The invention relates to an iterative process which can be used for the optimal selection of various different groups of advertising media (known as circuits) with different types of criteria, such as criteria relating to audience, target market, cost, geographical proximity to points of interest and geographical spacing between points, in order to provide an effective outdoor advertising campaign. Among the jargon used in the field of advertising, the term outdoor includes all advertising outside of the home and in the street, such as billboards, awnings, telephone booths, banners for buildings, hoardings, columns, information stands, street furniture, buses, etc. In this way, the circuit comprises a group of advertising media with identical or similar advertising objectives.

## Description

### OBJECT OF THE INVENTION

This system permits advertising media circuits to be created for the first time by means of a process which maximises and/or minimises concepts of different fields such as audience data (coverage, frequency, impact, ...), which each medium has with the geographical aspects such as might be geographical proximity to elements of interest (car dealers, department stores, pharmacies, etc.), economic criteria, aspects of geographical spacing, availability of the media and how the selection of each of the advertising media affects the previously selected group (new circuit) so that the process of advertising purchasing and management can be optimal. It also constructs the new circuits in a way that is balanced and uniform, avoiding the effect of the first of them having the best media. The optimisations with different groups of criteria are also carried out simultaneously in order to obtain balanced results of the new created circuits. In this way, the situation is prevented in which the optimisation of one circuit selects the best media with the rest of the circuits to create becoming unbalanced. If this is done consecutively the efficiency decreases. If it is done simultaneously the efficiency is maintained uniformly among all the new created circuits.

### PRIOR ART OF THE INVENTION

There has so far been a lack of accurate audience data on outdoor media, which meant that its planning and management was in general being carried out and marketed in media packets or groups known as "circuits", generally by means of manual processes and via the experience of professionals in the sector visiting each of the advertising media. Media were also sold on a unitary basis by interest in specific zones due to particular characteristics, such as closeness to a store or a garage or due to the importance of the street.
The best data that used to be available was statistical information supplied by the National Institute of Statistics via the census for learning the populations of towns and cities where these advertising media were to be found or data from the local councils. Other advertising media like the press or television which already had audience measuring systems have indeed developed planners and optimsers for buying their advertising space. But these tools are characterised by handling a single source or type of information as the basis for the processes, which is the audience data with its own metrics such as "coverage", "impact", "repetitions", "cost per thousand CPM", Gross Rating Point GRP, "Affinity to Target Public", etc. In other words, they optimise the planning of advertising purchasing based at all times on the criterion of the scope of the "audience". Since the birth of a system necessary for measuring audiences for outdoor advertising media, thanks to Spanish patent P-2001.01819 "Automatic System for Location of Visibility Zones", from the same applicant, which enables it to be known from which streets advertising can be seen and therefore know which "audience" each advertising medium has if one knows the traffic in those streets, and with the integration of digital cartography, a new "geographical" component is added, and so too therefore is the possibility of expanding the purchasing criteria for the outdoor advertising media.

### DESCRIPTION OF THE INVENTION

According to what is claimed, the present application relates to an Automated System and Method for Planning and Creating Optimised Circuits for Outdoor Advertising Media. Among the jargon used in the field of advertising, the term "outdoor" includes all advertising outside of the home and in the street, such as billboards, awnings, telephone booths, banners for buildings, hoardings, columns, information stands, street furniture, buses, etc. In this way, the "circuit" comprises a group of advertising media with identical or similar advertising objectives.

As far as the Automated System for Planning and Creating Optimised Circuits for Outdoor Advertising Media is concerned, this comprises at least:
electronic logic means provided with at least:
   a computing application for automating said Planning and Creating System for Optimised Circuits for Advertising Media,
   computerised data on advertising media which comprises at least one location datum on each advertising medium and one audience datum on each outdoor advertising medium, and
   computerised data on the outdoors media which comprises at least one digitised cartography of the outdoors media where the advertising media are located and exhibited, and which, starting from the location data of the advertising media, permits at least one distance datum to a particular required location to be quantified for each advertising medium; and
physical electronic means provided with at least:
   one computer where at least part of said computing application for automation is executed, and
   one computing medium for data storage accessible by the computer on request from the computing application for automation, wherein the computerised data from the advertising media and from the outdoors media is at least partially stored;
   where said Automated System for Planning and Creating Optimised Circuits for Outdoor Advertising Media comprises at least:
   a first module for planning, provided with means of definition of a set of initial parameters comprising at least the following initial parameters:
      total number of optimised circuits to create,
      selection of candidate advertising media for being assigned to at least one of said optimised circuits to create, and
      set of evaluation criteria for candidate advertising media for each optimised circuit to create which permits own optimisation objective to be established for each circuit, said set of evaluation criteria including at least: an evaluation criterion by audience level for the advertising medium and an evaluation criterion by proximity of said medium to a particular required location, with an optimisation objective being definable for each evaluation criterion selected from among: maximisation, minimisation and belonging to a defined range;
   a second module for evaluating candidate advertising media, provided with means of quantification of degrees of compliance of each of the candidate advertising media, in line with the set of evaluation criteria defined for a particular optimised circuit to create;
   a third module for selecting candidate advertising media and assignment of selected advertising media, provided with:
      means of selecting the candidate advertising media with the greatest degree of compliance with the set of evaluation criteria defined for said particular optimised circuit to create, simultaneously obtaining a number of selected advertising media no less than a limit number of simultaneous selection of candidate media lying between 1 and a number equal to the number of candidate advertising media; and
      means of assigning said selected advertising media to said particular optimised circuit to create;
   a fourth module for determining the optimised circuit to be considered by the second and third modules, said fourth module being provided with means of choosing a new optimised circuit to create, selected sequentially and rotationally from among the total number of optimised circuits to create, allowing the possibility of repeated choice of a given first optimised circuit following the choice of the last optimised circuit out of the total number of optimised circuits; with a new optimised circuit to create being chosen each time the fourth module is executed;
   a fifth module for verifying detention conditions for assignments of advertising media to optimised circuits, provided with means of verifying compliance with a set of detention conditions for assignments comprising at least one detention condition due to the absence of candidate advertising media on account of all candidate advertising media having already been assigned; and
   a sixth module for presenting results, provided with means of presenting a set of results which comprise at least:
      a list of the optimised circuits created, and
      a breakdown of the advertising media assigned to each of said created circuits on an optimised basis due to having advertising media assigned which maximise the degree of compliance with the set of evaluation criteria defined for each of the optimised circuits;
      where the computing application for automation comprises at least:
   means of executing the first module, in an initial phase;
   means of sequentially and repetitively executing the second, third, fourth and fifth modules, in an intermediate phase following the initial phase; the selected advertising media being assigned to the optimised circuit to create determined by the fourth module in each repetition; said intermediate execution being detained when the means of verifying the fifth module verify compliance with at least one of the detention conditions for assignments; and
   means of executing the sixth module, in a final phase following the intermediate phase.

In one of the possible embodiments of the invention:
the set of initial parameters definable in the first module includes as an additional first parameter a maximum number of circuits to which each advertising medium can be assigned simultaneously;
said System additionally comprising a first sub-module for controlling the number of assignments of each advertising medium, said first sub-module being operative within the third module; said first sub-module being provided with means of excluding the advertising medium, which act when said advertising medium reaches the maximum number of circuits to which it can be simultaneously assigned; also being provided with means of counting the number of assignments of said advertising medium, which increase said number in a unit if the number of assignments of that advertising medium is lower than the maximum number of circuits to which said advertising medium can be assigned simultaneously.

According to other possible embodiments of the invention, the computerised data on advertising media comprise at least one additional datum on each advertising medium, selected from among: economic cost per unit of time, audience profile, availability, geographical spacing between points, geographical concentration between media, coverage, impact and combinations thereof.

In accordance with other optional embodiments of the invention, the set of initial parameters definable in the first module comprises at least one additional initial parameter selected from among:
at least one target public profile for at least one optimised circuit to create;
at least one additional evaluation circuit for each candidate advertising medium, selected from; required availability dates, economic cost per unit of time, geographical spacing between points, geographical concentration between media, coverage, impact and combinations of said evaluation criteria, with an optimisation objective being definable for each additional evaluation criterion selected from among: maximisation, minimisation and belonging to a defined range;
and combinations of said initial parameters.

In some alternative embodiments of the invention:
the set of initial parameters definable in the first module includes at least one additional first parameter selected from among:
   method of normalising the quantifications of the degree of compliance of the evaluation criteria, selected from among: linear fit by means of mean and standard deviation, by means of maximum and minimum, simple regression by least square fit and method of fit defined by the user for establishing a basis for comparison between different quantifications of the degree of compliance;
   amount of weighting for each evaluation criterion for candidate advertising media; and
   combinations thereof;
      said System additionally comprising:
   a second sub-module for normalising, operative within the second module, said second sub-module being provided with means of normalising each quantification of the degree of compliance of each evaluation criterion for candidate advertising media; and
   a third sub-module for weighting, operative within the second module after the second sub-module, said third sub-module being provided with means of weighting for each normalised quantification of the degree of compliance of each evaluation criterion, on the basis of amounts of weighting defined for each evaluation criterion for candidate advertising media.

In accordance with other possible embodiments of the invention, the set of initial parameters definable in the first module furthermore includes an additional detention condition of assignments to an optimised circuit to be verified by the fifth module, selected from among: exceeding an upper limit and exceeding a lower limit, of at least one magnitude relative to the total of advertising media assigned to that optimised circuit, said magnitude being selected from among: number of assignments of advertising media assigned to that optimised circuit, total economic cost of the advertising media assigned to that optimised circuit, total audience level of the advertising media assigned to that optimised circuit, total coverage of the advertising media assigned to that optimised circuit and total impact of the advertising media assigned to that optimised circuit.

In one of the possible embodiments of the invention:
the set of initial parameters definable in the first module includes at least one additional first parameter selected from among:
   at least one exclusion criterion for advertising media for at least one optimised circuit, said exclusion criterion being selected from among exceeding an upper limit and exceeding a lower limit, of at least one magnitude selected from among: economic cost of the advertising media, distance of the advertising medium from a defined location and distance of the advertising medium to a paper fixation route;
   obligatory assignment advertising media for at least one optimised circuit to create:
      and combinations of said additional initial parameters; said System additionally comprising:
a fourth sub-module for filtration, executed by the means of sequential and repetitive execution prior to the execution of the second module, said fourth sub-module being provided with:
   means of exclusion of the advertising media which verify at least one initially defined exclusion criterion, avoiding its assignment to a particular optimised circuit to create, independently of whether other evaluation criteria are being met; and
   means of obligatory assignment of the advertising media initially defined as obligatory assignment advertising media, forcing their assignment to an optimised circuit to create, independently of whether other evaluation criteria are not being met.

According to another embodiment of the invention, for each optimised circuit to create, the limit number for simultaneous selection of candidate media for the means of selection of the third module is definable as an additional initial parameter of the set of initial parameters of the first module.

As far as the Method for Planning and Creating Optimised Circuits for Outdoor Advertising Media is concerned, this comprises at least:
a first stage of planning, which comprises defining a set of initial parameters which comprises at least the following initial parameters:
   total number of optimised circuits to create,
   selecting candidate advertising media to be assigned to at least one of said optimised circuits to create, and
   defining a set of evaluation criteria for candidate advertising media for each optimised circuit to create which permits establishing own optimisation objectives for each circuit, said set of evaluation criteria comprising at least: one evaluation criterion for audience level of the advertising medium and one evaluation criterion for proximity of that advertising medium to a defined required location, with an optimisation objective being definable for each evaluation criterion, selected from among: maximisation, minimisation and belonging to a defined range;
a second stage of evaluating candidate advertising media, which comprises quantifying degrees of compliance of each of the candidate advertising media, in line with a set of evaluation criteria defined for a particular optimised circuit to create;
a third stage of selecting candidate advertising media and assigning selected advertising media, which comprises:
   selecting the candidate advertising media with the greatest degree of compliance with the set of evaluation criteria defined for said particular optimised circuit to create, with a number of selected advertising media being simultaneously obtained no less than a limit number for simultaneous selection of candidate advertising media between 1 and a number equal to the number of candidate advertising media; and
   assigning said selected advertising media to said particular optimised circuit to create;
a fourth stage of determining the optimised circuit to be considered by the second and third stages, said fourth stage consisting of choosing a new optimised circuit to create, selected sequentially and rotationally from among the total number of optimised circuits to create, allowing the possibility of repeated choice of a given first optimised circuit following the choice of the last optimised circuit out of the total number of optimised circuits; with a new optimised circuit to create being chosen each time the fourth stage is executed;
a fifth stage of verifying detention conditions for assignments of advertising media to optimised circuits, which consists of verifying compliance with a set of detention conditions for assignments comprising at least one detention condition due to the absence of candidate advertising media on account of all candidate advertising media having already been assigned; and
a sixth stage of presenting results, provided with means of presenting a set of results which comprise at least:
   a list of the optimised circuits created, and
   a breakdown of the advertising media assigned to each of said created circuits on an optimised basis due to having advertising media assigned which maximise the degree of compliance with the set of evaluation criteria defined for each of the optimised circuits;
   where said Process for Planning and Creating Optimised Circuits for Outdoor Advertising Media comprises:
executing the first stage, in an initial phase; sequentially and repetitively executing the second, third, fourth and fifth stages, in an intermediate phase following the initial phase; the selected advertising media being assigned to the optimised circuit to create determined by the fourth stage in each repetition; said intermediate execution being detained when the fifth stage verifies compliance with at least one of the detention conditions for assignments; and
executing the sixth stage, in a final phase following the intermediate phase.

In one of the possible embodiments of the invention:
the set of initial parameters definable in the first stage includes as an additional first parameter a maximum number of circuits to which each advertising medium can be assigned simultaneously;
said Process additionally comprising a first sub-stage for controlling the number of assignments of each advertising medium, said first sub-stage being operative within the third stage; said first sub-stage consisting of excluding the advertising medium if said advertising medium reaches the maximum number of circuits to which it can be simultaneously assigned; also consisting of counting the number of assignments of said advertising medium, said number being increased in a unit if the number of assignments of that advertising medium is lower than the maximum number of circuits to which said advertising medium can be assigned simultaneously.

In accordance with other possible embodiments of the invention, the set of initial parameters definable in the first stage comprises at least one additional initial parameter selected from among:
at least one target public profile for at least one optimised circuit to create;
at least one additional evaluation circuit for each candidate advertising medium, selected from: required availability dates, economic cost per unit of time, geographical spacing between points, geographical concentration between media, coverage, impact and combinations of said evaluation criteria, with an optimisation objective being definable for each additional evaluation criterion selected from among: maximisation, minimisation and belonging to a defined range;
and combinations of said initial parameters.

In some alternative embodiments of the invention:
the set of initial parameters definable in the first stage includes at least one additional first parameter selected from among:
   method of normalising the quantifications of the degree of compliance of the evaluation criteria, selected from among: linear fit by means of mean and standard deviation, by means of maximum and minimum, simple regression by least square fit and method of fit defined by the user for establishing a basis for comparison between different quantifications of the degree of compliance;
   amount of weighting for each evaluation criterion for candidate advertising media; and
   combinations thereof;
   said Process additionally comprising:
   a second sub-stage for normalising, executed within the second stage, said second sub-stage consisting of normalising each quantification of the degree of compliance of each evaluation criterion for candidate advertising media; and
   a third sub-stage for weighting, executed within the second stage after the second sub-stage, said third sub-stage consisting of weighting each normalised quantification of the degree of compliance of each evaluation criterion, on the basis of amounts of weighting defined for each evaluation criterion for candidate advertising media.

In accordance with other optional embodiments of the invention, the set of initial parameters definable in the first stage furthermore includes an additional detention condition of assignments to an optimised circuit to be verified in the fifth stage, selected from among: exceeding an upper limit and exceeding a lower limit, of at least one magnitude relative to the total of advertising media assigned to that optimised circuit, said magnitude being selected from among: number of assignments of advertising media assigned to that optimised circuit, total economic cost of the advertising media assigned to that optimised circuit, total audience level of the advertising media assigned to that optimised circuit, total coverage of the advertising media assigned to that optimised circuit and total impact of the advertising media assigned to that optimised circuit.

In some of the possible embodiments of the invention:
the set of initial parameters definable in the first stage includes at least one additional first parameter selected from among:
   at least one exclusion criterion for advertising media for at least one optimised circuit, said exclusion criterion being selected from among exceeding an upper limit and exceeding a lower limit, of at least one magnitude selected from among: economic cost of the advertising media, distance of the advertising medium from a defined location and distance of the advertising medium to a paper fixation route;
   obligatory assignment advertising media for at least one optimised circuit to create:
      and combinations of said additional initial parameters:
   said Process additionally comprising:
      a fourth sub-stage for filtration, executed sequentially and repetitively prior to the execution of the second stage, said fourth sub-stage comprising:
         excluding the advertising media which verify at least one initially defined exclusion criterion, avoiding its assignment to a particular optimised circuit to create, independently of whether other evaluation criteria are being met; and
         obligatorily assigning the advertising media initially defined as obligatory assignment advertising media, forcing their assignment to an optimised circuit to create, independently of whether other evaluation criteria are not being met.

According to other possible embodiments of the invention, for each optimised circuit to create, the limit number for simultaneous selection of candidate media used in the third stage is definable as an additional initial parameter of the set of initial parameters of the first stage.

### BRIEF DESCRIPTION OF THE DRAWINGS

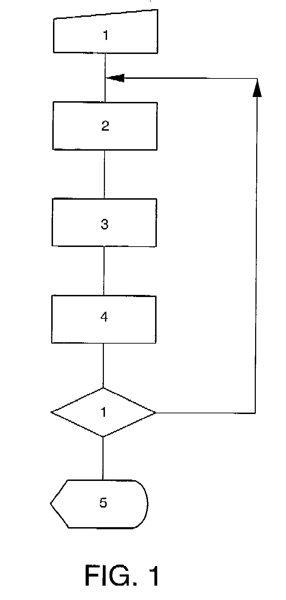

Figure 1: by means of a flow diagram, this schematically illustrates the logic sequence of functioning of one of the possible embodiments of the invention.

### DESCRIPTION OF AN EMBODIMENT OF THE INVENTION

The System/Method forming the object of this invention aims to optimise the composition of the circuits basing itself on a process where maximisation and minimisation criteria and/or metrics of different fields can be mixed, which have nothing to do with each other and which therefore cannot initially be operated jointly; as are audience data, cost, those of fixation, those of availability and especially in this case the geographical aspects with the aim of selecting the best set of media complying with a series of defined requirements.
It has to be emphasised that the optimisation process is simultaneous for the construction of several circuits at the same time, since it avoids the effect of "The first one gets the best".

The steps to follow for an optimisation involve the DEFINITION of initial parameters, made by means of the First Module/Stage (1) for planning:
- Selection of the set of candidate media with which it is wished to work and which will be used for feeding the system for selecting. Optionally, one can work with availability periods in order to see which media can be included depending on the dates.
- Defining the number of new optimised circuits to create.
- Definition of the criteria by which the media of the group of candidates will be identified and selected. This is the most important part given that it concentrates the essence of the optimisation process since it indicates which variables are to be used for choosing each medium and in which way they are to be used in each case.
- Definition of the maximum and/or minimum limits of the process: when the selection process has to end or how far it has to continue. (For example, when it reaches a certain number of media, or a defined budget, or an audience level.)
- Weighting of criteria. Greater or lesser importance can be established for each of the selected criteria, prioritising for example "Proximity to car dealers" as against "Minimising the cost of the circuit". The easiest way for representing the importance of the criteria is to distribute 100% among them. For example, two criteria of equal importance would be 50% + 50%, and if there are three criteria but one has to have a lot of importance then it could be 80% + 10% + 10%. Another way would be to give a mark out of ten to each criterion.
- Definition of the target publics it is wished to aim at. In this way, a particular profile of individuals is sought for the advertising.
- Defining whether a medium can be shared in the new circuits, in other words be in several at the same time, or whether the selection of a medium is excluding and once included in the optimum circuit it cannot be used in others. If it can be reused, the number of times it can be selected has to be defined.
- Defining whether there are any restricting aspects for the selection of the medium, due to which a medium must not be selected even though it meets the criteria. (For example, Criteria of maximum audience though without exceeding the cost per medium by a certain amount.) Another restriction format is the minimum requisites for each criterion and each medium (Criterion of minimum cost, though at all times with at least one bank branch office within 300 metres). It can also be made obligatory to use a particular paper fixation route.
- Defining whether there exist any media which must be included of necessity, independently of the selection process. Also whether or these ought to be considered for the selection of the rest of the process.

Once the parameters have been defined, an optimum number of circuits to construct is obtained, each with its own targets to meet; and also a set of candidate media to be chosen for these new circuits.

Having defined the number of optimum circuits to be created by the process, together with all the parameters mentioned above, each of them will be taken rotationally along with all their characteristics defined by the parameters, as will be stated below. In the operation, at least one medium must be selected for that circuit. After that, another circuit will be taken for operating, from which in the same way at least one other medium will be obtained, and this will be repeated so on rotationally until all the circuits have been covered and filled, as described below in further detail.
- FILTERING OF MEDIA (particular embodiment which would not be indispensable in the most basic embodiments, not represented in the Figure): All the media are analysed in order to check whether the restrictive aspects demanded by the circuit being operated with are being met. Some of these criteria are "static", due to which the initial filtering is sufficient for discarding all those media which are outside of the defined filters. Another type of filter, the "dynamic" ones, must be checked each time since they depend on the previously selected media.
- EVALUATION OF MEDIA, done by means of the Second Module/Stage (2) for evaluation of candidate advertising media: For each optimum circuit to create, all the media are evaluated with the criteria defined for that circuit. At least one criterion must be defined, for example, "Maximise the coverage", or several, such as for example: "Minimise cost" and "At least 200 metres from a pharmacy". Evaluating in terms of a criterion consists of first assigning to each candidate medium a value for each criterion, this value must consider the objective of the criterion, maximise or minimise, if it is maximise then the datum can be used in itself (meters, euros, etc.), and if it is minimise then a corrector must be applied, such as for example the inverse of the datum which causes the value to be higher when the data is smaller; another way of correcting is to change the sign of the datum by multiplying by "-1", In the case of "Minimise cost" for example, it is given the value which is the inverse of the tariff for the medium, for "Maximise distance to schools", the meters separating the medium from the nearest school are introduced, or for "Number of pharmacies within 600 m" this precise count for pharmacies is introduced. So, for each candidate medium we have as many values assigned as there are criteria defined for a candidate circuit. These values are metrics for different fields which do not permit the best medium to be established. To do this one proceeds to a normalisation process (particular embodiment which would not be indispensable in the most basic embodiments, not represented in the Figure) of values within each field. A mathematical formula can be used which is a linear fit by means of the mean and standard deviation, though other processes can also be used, such as might be: linear fit by means of maximum and minimum, simple regression by least square fit and even methods defined by the user. It has to be borne in mind that the value of some of the criteria used are affected by the media which have already been selected previously for the optimum circuit that is being constructed. So, for example, the calculation of coverage which means "amount of people who see at least one medium among all those chosen" changes each time a medium is selected. This also occurs with the geographical spacing/concentration of the media. This means that the evaluation process has to be repeated each time a medium is selected, since it is possible that some of the values assigned to the face can be modified due to the inclusion of a new element in the circuit. Once all the normalised values have been calculated for each medium, a weighting process is used (particular embodiment which would not be indispensable in the most basic embodiments, not represented in the Figure) which was defined for each criterion and is applied to each normalised value. Afterwards, all the values of the criteria for a medium are summed, obtaining a "mark" which permits the different media to be compared.
- SELECTION OF MEDIUM, done by means of the Third Module/Stage (3) for selecting candidate advertising media and assigning selected advertising media: Once the mark has been obtained for each medium, the highest mark or marks must be identified for selecting, since this will be the medium or media with the set of best criteria for the circuit with which one is operated.
- ANNULMENT OF THE MEDIUM (particular embodiment which would not be indispensable in the most basic embodiments, not represented in the Figure): If it is defined that the medium cannot be re-utilised, the selected medium is annulled for the rest of the circuit being operated with. If it can be used again, the number of times which it has already been used is controlled until the limit is reached defined in the "reutilisation" capacity of the medium.
- SELECTION OF CIRCUIT FOR OPERATING, done by means of the Fourth Module/Stage (4) for determining the optimised circuit to consider by the Second (2) and Third (3) Modules/Stages: the following optimum circuit that it is wished to create is taken, with which the process will be repeated.
- CHECKING OF LIMITS, done by means of the Fifth Module/Stage (5) for verifying detention conditions for assignments of advertising media to optimised circuits: once the best medium selected has been added to the circuit that is being operated with. All the defined limits are checked, both lower ("the circuit has to have at least 100 media") and upper ("the price of the circuit must be no greater than 10,000 €") and, in the event of "incompatibility", considering the prevalence of one over another defined by the user. This check of limits (which also includes the limit due to absence of candidate advertising media in the event that they have all been assigned) marks the continuity of the process, since if one of them is reached (or all if this has been marked) then the circuit which is being operated with has been completed and its specific optimisation process is regarded as terminated. Because of this, that circuit must be taken out of the module for SELECTION OF CIRCUIT TO OPERATE and leave the rest of the circuits so that they can continue with the process. There can also exist a set of global limits where, for example, it is defined that the sum of all the optimised circuits will be 1000 media or that the entire budget will be no greater than 50,000 €.

The process (FILTERING, EVALUATION, SELECTION, ANNULMENT, SELECTION OF CIRCUIT, CHECKING OF LIMITS) is repeated until all the circuits comply with their defined limits (local or global) or until the candidate media have run out.
- once the process has terminated, the Sixth Module/Stage (6) for presenting results SHOWS the new circuits now optimised with the criteria that the user has defined specific for each circuit, with the information on the basis of which each medium was selected in each case.
Final considerations: the EVALUATION process is the most complex and consists of different internal functions, since each metric that is used has its own form of calculation specific to each field. So, for the calculation of "Coverage", calculations must be made on the media that have already been selected, and these results be compared with each medium in order to see which one best complements the circuit being operated with. Another field of action such as the geographical one requires that, for each medium, a calculation has to be made of the distances to each of the selected elements of interest, for example, in the case of pharmacies, all the pharmacies and all the media have to be located and the distances between them measured. The distance can be of different types, Euclidean distance, "rectangular" distance, distance measured by the axes of the streets as if one were walking along them, critical path, least distance or least time, all such topological measurements and even those defined by the user. For example, for the calculation of the nearest elements and the spacing/concentration measurements one can use Voronoi algorithms.

## Claims

1. AUTOMATED **SYSTEM** FOR PLANNING AND CREATING OPTIMISED **CIRCUITS** FOR **OUTDOOR ADVERTISING MEDIA**, which comprises at least:
**electronic logic means** provided with at least:
a **computing application** for automating said Planning and Creating System for Optimised Circuits for Advertising Media,
**computerised data on advertising media** which comprises at least one **location datum** on each advertising medium and one **audience datum** on each outdoor advertising medium, and
**computerised data on the outdoors media** which comprises at least one **digitised cartography of the outdoors media** where the advertising media are located and exhibited, and which, starting from the location data of the advertising media, permits at least **one distance datum to a particular required location** to be quantified for each advertising medium; and
**physical electronic means** provided with at least:
one computer where at least part of said computing application for automation is executed, and
one **computing medium for data storage** accessible by the computer on request from the computing application for automation, wherein the computerised data from the advertising media and from the outdoors media is at least partially stored;
**characterised in that** said Automated System for Planning and Creating Optimised Circuits for Outdoor Advertising Media comprises at least:
a **first module** (1) for planning, provided with **means of definition** of a **set of initial parameters** comprising at least the following initial parameters:
total number of optimised circuits to create,
selection of **candidate advertising media** for being assigned to at least one of said optimised circuits to create, and
**set of evaluation criteria for candidate advertising media** for **each** optimised circuit to create which permits own optimisation objective to be established for each circuit, said set of evaluation criteria including at least; an evaluation criterion by audience level for the advertising medium and an evaluation criterion by proximity of said medium to a particular required location, with an optimisation objective being definable for each evaluation criterion selected from among: maximisation, minimisation and belonging to a defined range;
a **second module** (2) for evaluating candidate advertising media, provided with **means of quantification of degrees of compliance** of each of the candidate advertising media, in line with the set of evaluation criteria defined for a particular optimised circuit to create;
a **third module** (3) for selecting candidate advertising media and assignment of selected advertising media, provided with:
**means of selecting** the candidate advertising media with the greatest degree of compliance with the set of evaluation criteria defined for said particular optimised circuit to create, simultaneously obtaining a number of selected advertising media no less than a **limit number of simultaneous selection of candidate media** lying between 1 and a number equal to the number of candidate advertising media; and
**means of assigning** said selected advertising media to said particular optimised circuit to create;
a **fourth module** (4) for determining the optimised circuit to be considered by the second (2) and third (3) modules, said fourth module (4) being provided with means of choosing a new optimised circuit to create, selected sequentially and rotationally from among the total number of optimised circuits to create, allowing the possibility of repeated choice of a given first optimised circuit following the choice of the last optimised circuit out of the total number of optimised circuits; with a new optimised circuit to create being chosen each time the fourth module (4) is executed;
a **fifth module** (5) for verifying detention conditions for assignments of advertising media to optimised circuits, provided with **means of verifying** compliance with **a set of detention conditions for assignments** comprising at least one detention condition due to the absence of candidate advertising media on account of all candidate advertising media having already been assigned; and
a **sixth module** (6) for presenting results, provided with **means of presenting a set of results** which comprise at least:
a list of the optimised circuits created, and
a breakdown of the advertising media assigned to each of said created circuits on an optimised basis due to having advertising media assigned which maximise the degree of compliance with the set of evaluation criteria defined for each of the optimised circuits;
where the computing application for automation comprises at least:
**means of executing** the first module (1), in an initial phase;
**means of sequentially and repetitively executing** the second (2), third (3), fourth (4) and fifth (5) modules, in an intermediate phase following the initial phase; the selected advertising media being assigned to the optimised circuit to create determined by the fourth module (4) in each repetition; said intermediate execution being detained when the means of verifying the fifth module (5) verify compliance with at least one of the detention conditions for assignments; and
**means of executing** the sixth module (6), in a final phase following the intermediate phase.

2. AUTOMATED SYSTEM FOR PLANNING AND CREATING OPTIMISED CIRCUITS FOR OUTDOOR ADVERTISING MEDIA, according to claim 1, **characterised in that**:
the set of initial parameters definable in the first module (1) includes as an additional first parameter a maximum number of circuits to which each advertising medium can be assigned simultaneously;
said System additionally comprising a first sub-module for controlling the number of assignments of each advertising medium, said first sub-module being operative within the third module (3); said first sub-module being provided with means of excluding the advertising medium, which act when said advertising medium reaches the maximum number of circuits to which it can be simultaneously assigned; also being provided with means of counting the number of assignments of said advertising medium, which increase said number in a unit if the number of assignments of that advertising medium is lower than the maximum number of circuits to which said advertising medium can be assigned simultaneously.

3. AUTOMATED SYSTEM FOR PLANNING AND CREATING OPTIMISED CIRCUITS FOR OUTDOOR ADVERTISING MEDIA, according to claim 1, **characterised in that** the computerised data on advertising media comprise at least one additional datum on each advertising medium, selected from among: economic cost per unit of time, audience profile, availability, geographical spacing between points, geographical concentration between media, coverage, impact and combinations thereof.

4. AUTOMATED SYSTEM FOR PLANNING AND CREATING OPTIMISED CIRCUITS FOR OUTDOOR ADVERTISING MEDIA, according to claim 3, **characterised in that** the set of initial parameters definable in the first module (1) comprises at least one additional initial parameter selected from among:
at least one target public profile for at least one optimised circuit to create;
at least one additional evaluation circuit for each candidate advertising medium, selected from, required availability dates, economic cost per unit of time, geographical spacing between points, geographical concentration between media, coverage, impact and combinations of said evaluation criteria, with an optimisation objective being definable for each additional evaluation criterion selected from among: maximisation, minimisation and belonging to a defined range;
and combinations of said initial parameters.

5. AUTOMATED SYSTEM FOR PLANNING AND CREATING OPTIMISED CIRCUITS FOR OUTDOOR ADVERTISING MEDIA, according to claim 4, **characterised in that**:
the set of initial parameters definable in the first module (1) includes at least one additional first parameter selected from among:
method of normalising the quantifications of the degree of compliance of the evaluation criteria, selected from among: linear fit by means of mean and standard deviation, by means of maximum and minimum, simple regression by least square fit and method of fit defined by the user for establishing a basis for comparison between different quantifications of the degree of compliance;
amount of weighting for each evaluation criterion for candidate advertising media; and
combinations thereof;
said System additionally comprising:
a second sub-module for normalising, operative within the second module (2), said second sub-module being provided with means of normalising each quantification of the degree of compliance of each evaluation criterion for candidate advertising media; and
a third sub-module for weighting, operative within the second module (2) after the second sub-module, said third sub-module being provided with means of weighting for each normalised quantification of the degree of compliance of each evaluation criterion, on the basis of amounts of weighting defined for each evaluation criterion for candidate advertising media.

6. AUTOMATED SYSTEM FOR PLANNING AND CREATING OPTIMISED CIRCUITS FOR OUTDOOR ADVERTISING MEDIA, according to claim 3, **characterised in that** the set of initial parameters definable in the first module (1) furthermore includes an additional detention condition of assignments to an optimised circuit to be verified by the fifth module (5), selected from among: exceeding an upper limit and exceeding a lower limit, of at least one magnitude relative to the total of advertising media assigned to that optimised circuit, said magnitude being selected from among: number of assignments of advertising media assigned to that optimised circuit, total economic cost of the advertising media assigned to that optimised circuit, total audience level of the advertising media assigned to that optimised circuit, total coverage of the advertising media assigned to that optimised circuit and total impact of the advertising media assigned to that optimised circuit.

7. AUTOMATED SYSTEM FOR PLANNING AND CREATING OPTIMISED CIRCUITS FOR OUTDOOR ADVERTISING MEDIA, according to claim 3, **characterised in that**:
the set of initial parameters definable in the first module (1) includes at least one additional first parameter selected from among:
at least one exclusion criterion for advertising media for at least one optimised circuit, said exclusion criterion being selected from among exceeding an upper limit and exceeding a lower limit, of at least one magnitude selected from among: economic cost of the advertising media, distance of the advertising medium from a defined location and distance of the advertising medium to a paper fixation route;
obligatory assignment advertising media for at least one optimised circuit to create:
and combinations of said additional initial parameters:
said System additionally comprising:
a fourth sub-module for filtration, executed by the means of sequential and repetitive execution prior to the execution of the second module (2), said fourth sub-module being provided with:
means of exclusion of the advertising media which verify at least one initially defined exclusion criterion, avoiding its assignment to a particular optimised circuit to create, independently of whether other evaluation criteria are being met; and
means of obligatory assignment of the advertising media initially defined as obligatory assignment advertising media, forcing their assignment to an optimised circuit to create, independently of whether other evaluation criteria are not being met.

8. AUTOMATED SYSTEM FOR PLANNING AND CREATING OPTIMISED CIRCUITS FOR OUTDOOR ADVERTISING MEDIA, according to claim 1, **characterised in that**, for each optimised circuit to create, the limit number for simultaneous selection of candidate media for the means of selection of the third module (3) is definable as an additional initial parameter of the set of initial parameters of the first module (1).

9. METHOD FOR PLANNING AND CREATING OPTIMISED CIRCUITS FOR **OUTDOOR ADVERTISING MEDIA,** **characterised in that** said Process for Planning and Creating Optimised Circuits for outdoor Advertising Media comprises at least:
a **first stage** (1) of planning, which comprises **defining a set of initial parameters** which comprises at least the following initial parameters:
total number of optimised circuits to create,
selecting **candidate advertising media** to be assigned to at least one of said optimised circuits to create, and
defining a set of **evaluation criteria for candidate advertising media** for each optimised circuit to create which permits establishing own optimisation objectives for each circuit, said set of evaluation criteria comprising at least: one evaluation criterion for audience level of the advertising medium and one evaluation criterion for proximity of that advertising medium to a defined required location, with an optimisation objective being definable for each evaluation criterion, selected from among: maximisation, minimisation and belonging to a defined range;
a **second stage** (2) of evaluating candidate advertising media, which comprises **quantifying degrees of compliance** of each of the candidate advertising media, in line with a set of evaluation criteria defined for a particular optimised circuit to create;
a **third stage** (3) of selecting candidate advertising media and assigning selected advertising media, which comprises:
**selecting** the candidate advertising media with the greatest degree of compliance with the set of evaluation criteria defined for said particular optimised circuit to create, with a number of selected advertising media being simultaneously obtained no less than a **limit number for simultaneous selection of candidate advertising media** between 1 and a number equal to the number of candidate advertising media; and
**assigning** said selected advertising media to said particular optimised circuit to create;
a **fourth stage** (4) of determining the optimised circuit to be considered by the second (2) and third (3) stages, said fourth stage (4) consisting of choosing a new optimised circuit to create, selected sequentially and rotationally from among the total number of optimised circuits to create, allowing the possibility of repeated choice of a given first optimised circuit following the choice of the last optimised circuit out of the total number of optimised circuits; with a new optimised circuit to create being chosen each time the fourth stage (4) is executed;
a **fifth stage** (5) of verifying detention conditions for assignments of advertising media to optimised circuits, which consists of **verifying** compliance with a **set of** detention conditions for **assignments** comprising at least one detention condition due to the absence of candidate advertising media on account of all candidate advertising media having already been assigned; and
a **sixth stage** (6) of presenting results, provided with means of **presenting** a **set of results** which comprise at least:
a list of the optimised circuits created, and
a breakdown of the advertising media assigned to each of said created circuits on an optimised basis due to having advertising media assigned which maximise the degree of compliance with the set of evaluation criteria defined for each of the optimised circuits;
where said Process for Planning and Creating Optimised Circuits for Outdoor Advertising Media comprises:
**executing** the first stage (1), in an initial phase;
**sequentially and repetitively executing** the second (2), third (3), fourth (4) and fifth (5) stages, in an intermediate phase following the initial phase; the selected advertising media being assigned to the optimised circuit to create determined by the fourth stage (4) in each repetition; said intermediate execution being detained when the fifth stage (5) verifies compliance with at least one of the detention conditions for assignments; and
executing the sixth stage (6), in a final phase following the intermediate phase.

10. METHOD FOR PLANNING AND CREATING OPTIMISED CIRCUITS FOR OUTDOOR ADVERTISING MEDIA, according to claim 9, **characterised in that**:
the set of initial parameters definable in the first stage (1) includes as an additional first parameter a maximum number of circuits to which each advertising medium can be assigned simultaneously;
said Process additionally comprising a first sub-stage for controlling the number of assignments of each advertising medium, said first sub-stage being operative within the third stage (3); said first sub-stage consisting of excluding the advertising medium if said advertising medium reaches the maximum number of circuits to which it can be simultaneously assigned; also consisting of counting the number of assignments of said advertising medium, said number being increased in a unit if the number of assignments of that advertising medium is lower than the maximum number of circuits to which said advertising medium can be assigned simultaneously.

11. METHOD FOR PLANNING AND CREATING OPTIMISED CIRCUITS FOR OUTDOOR ADVERTISING MEDIA, according to claim 9, **characterised in that** the set of initial parameters definable in the first stage (1) comprises at least one additional initial parameter selected from among:
at least one target public profile for at least one optimised circuit to create;
at least one additional evaluation circuit for each candidate advertising medium, selected from: required availability dates, economic cost per unit of time, geographical spacing between points, geographical concentration between media, coverage, impact and combinations of said evaluation criteria, with an optimisation objective being definable for each additional evaluation criterion selected from among: maximisation, minimisation and belonging to a defined range;
and combinations of said initial parameters.

12. METHOD FOR PLANNING AND CREATING OPTIMISED CIRCUITS FOR OUTDOOR ADVERTISING MEDIA, according to claim 11, **characterised in that**:
the set of initial parameters definable in the first stage (1) includes at least one additional first parameter selected from among:
method of normalising the quantifications of the degree of compliance of the evaluation criteria, selected from among: linear fit by means of mean and standard deviation, by means of maximum and minimum, simple regression by least square fit and method of fit defined by the user for establishing a basis for comparison between different quantifications of the degree of compliance;
amount of weighting for each evaluation criterion for candidate advertising media; and
combinations thereof;
said Process additionally comprising:
a second sub-stage for normalising, executed within the second stage (2), said second sub-stage consisting of normalising each quantification of the degree of compliance of each evaluation criterion for candidate advertising media; and
a third sub-stage for weighting, executed within the second stage (2) after the second sub-stage, said third sub-stage consisting of weighting each normalised quantification of the degree of compliance of each evaluation criterion, on the basis of amounts of weighting defined for each evaluation criterion for candidate advertising media.

13. METHOD FOR PLANNING AND CREATING OPTIMISED CIRCUITS FOR OUTDOOR ADVERTISING MEDIA, according to claim 9, **characterised in that** the set of initial parameters definable in the first stage (1) furthermore includes an additional detention condition of assignments to an optimised circuit to be verified in the fifth stage (5), selected from among: exceeding an upper limit and exceeding a lower limit, of at least one magnitude relative to the total of advertising media assigned to that optimised circuit, said magnitude being selected from among: number of assignments of advertising media assigned to that optimised circuit, total economic cost of the advertising media assigned to that optimised circuit, total audience level of the advertising media assigned to that optimised circuit, total coverage of the advertising media assigned to that optimised circuit and total impact of the advertising media assigned to that optimised circuit.

14. METHOD FOR PLANNING AND CREATING OPTIMISED CIRCUITS FOR OUTDOOR ADVERTISING MEDIA, according to claim 11, **characterised in that**:
the set of initial parameters definable in the first stage (1) includes at least one additional first parameter selected from among:
at least one exclusion criterion for advertising media for at least one optimised circuit, said exclusion criterion being selected from among exceeding an upper limit and exceeding a lower limit, of at least one magnitude selected from among: economic cost of the advertising media, distance of the advertising medium from a defined location and distance of the advertising medium to a paper fixation route;
obligatory assignment advertising media for at least one optimised circuit to create:
and combinations of said additional initial parameters:
said Process additionally comprising:
a fourth sub-stage for filtration, executed sequentially and repetitively prior to the execution of the second stage (2), said fourth sub-stage comprising:
excluding the advertising media which verify at least one initially defined exclusion criterion, avoiding its assignment to a particular optimised circuit to create, independently of whether other evaluation criteria are being met; and
obligatorily assigning the advertising media initially defined as obligatory assignment advertising media, forcing their assignment to an optimised circuit to create, independently of whether other evaluation criteria are not being met.

15. METHOD FOR PLANNING AND CREATING OPTIMISED CIRCUITS FOR OUTDOOR ADVERTISING MEDIA, according to claim 9, **characterised in that** for each optimised circuit to create, the limit number for simultaneous selection of candidate media used in the third stage (3) is definable as an additional initial parameter of the set of initial parameters of the first stage (1).
